# EUROPEAN PATENT APPLICATION

(11) **EP 2 045 996 A2**
(43) Date of publication of application: **08.04.2009**
(21) Application number: 08165918.7
(22) Date of filing: 06.10.2008
(51) Int. Cl.: H04L 29/06, H04M 11/06

(54) **Codec automatic setting system of IAD and control method thereof in DSL network**

(30) Priority: 05.10.2007 KR 20070100450
(71) Applicant: Samsung Electronics Co., Ltd., Suwon-si, Gyeonggi-do 442-743 (KR)
(72) Inventor: Seon, Min-Kyu, Gyeonggi-do (KR)
(74) Representative: Grünecker, Kinkeldey, Stockmair & Schwanhäusser Anwaltssozietät

(57) **Abstract**

A codec automatic setting system of an IAD in a DSL network includes a codec table, a codec negotiator, a codec detector, and a codec selector. The codec table stores at least one codec list. The codec negotiator incorporates an applicable codec list from the codec table into a call request message, transmits the same to a reception IAD, and receives a response message when an arbitrary terminal requests a call. The codec detector detects a codec list from the response message. The codec selector compares the codec list of the reception IAD with the codec list stored in the codec table, and selects a settable codec. An automatic codec switching function in an IAD system of a network supporting a DSL automatically switches a codec into an optimum codec according to a DSL connection band and forming and release of a VoIP call, thereby securing an optimum communication quality for an Internet phone.

## Description

### FIELD OF THE INVENTION:

The present invention relates to a method for automatically switching a voice over Internet protocol (VoIP) communication codec during narrowband digital subscriber line (DSL) connection in an integrated access devices (IAD) system and, more particularly, to offer/answer processing technology of an session initiation protocol (SIP) standard protocol for allowing an Internal protocol (IP) terminal to provide services where voice quality is secured.

### BACKGROUND OF THE INVENTION

A household and a company use an asymmetric digital subscriber line (ADSL) allowing digital information transmission through a telephone circuit in order to use the Internet and a telephone.

The ADSL has an asymmetric structure that uses most of channels for downward transmission of sending information toward a user side, and assigns a very small portion of the channels for information from the user (i.e., for upward transmission).

For example, German line DSL100 in Europe assigns 1 Mbps for downward transmission and 128 Kbps for upward transmission, and German line DSL2000 assigns 2 Mbps for downward transmission and 192 Kbps for upward transmission.

In a related art, to use an Internet phone under a narrowband upward condition, the number of simultaneous calls is limited, the system is fixedly set using a codec using a small bandwidth, or silence suppression of a VoIP codec or a multi-frame function of a real-time transport protocol (RTP) payload has been used.

However, in case of limiting the number of simultaneous calls because of a problem in a bandwidth in an Internet phone system using a related art ADSL, there has been a problem of increasing user inconvenience.

In addition, in the case where the system is fixedly set using a codec using a small bandwidth, sound quality reduction occurs.

Further, the silence suppression, which is used to reduce a bandwidth on the basis of the fact that about 50% of calls are a bundle, is vulnerable to a packet loss, a delay, and a jitter influence caused by a network load, so that voice quality reduction may be caused.

Meanwhile, using multi-frame transmission in order to reduce overhead can reduce a bandwidth to some degree and thus used in a limited way, but is against packet division used in a narrowband condition. Accordingly, 30 m or more is not used.

### SUMMARY OF THE INVENTION

It is an aim of certain embodiments of the invention to solve, mitigate or obviate, at least partly, at least one of the problems and/or disadvantages associated with the prior art. Certain embodiments aim to provide at least one of the advantages described below.

According to an aspect of the invention, the codec automatic setting system of an integrated access device (IAD) in a digital subscriber line (DSL) network may include a codec table storing at least one codec list; a codec negotiator incorporating an applicable codec list from the codec table into a call request message, transmitting the same to a reception IAD, and receiving a response message including a settable codec list when an arbitrary terminal requests a call; a codec detector detecting a codec list from the response message received from the reception IAD; and a codec selector comparing the codec list of the reception IAD detected from the response message through the codec detector with the codec list stored in the codec table, and selecting a settable codec.

The codec negotiator may transmit the response message including the applicable codec list from the codec table when receiving a call request message including a codec list from a transmission IAD.

The codec negotiator may transmit a response message including a codec list applicable from the codec table to the reception IAD when receiving a call re-request message from the reception IAD.

When an arbitrary terminal requests a call additionally, the codec negotiator may incorporate a codec list processable by the reception IAD in communication into a call re-request message, transmit the same to the reception IAD, and receive a response message including a settable codec list.

The codec selector may compare the codec list of the reception IAD detected from the response message with the codec list stored in the codec table, and then selects a settable codec.

The codec selector may detect a codec list to be incorporated into a call request message, a response message, and a call re-request message from the codec table depending on an uplink frequency band and a set call.

The codec table may include at least one of G.711, G.726-32, G.726-16, G.729, G.723.1 and T.38 Fax mode.

According to another aspect of the invention, the control method of automatically setting a codec of an IAD in a DSL network may include, when an arbitrary terminal requests a call, incorporating an applicable codec list from a codec table into a call request message, transmitting the same to a reception IAD, and receiving a response message including a settable codec list; detecting the codec list from the response message received from the reception IAD; and comparing the codec list of the reception IAD detected from the response message with the codec list stored in the codec table, and selecting a settable codec.

The control method may further include, when receiving a call request message including a codec list from a transmission IAD, transmitting a response message including an applicable codec list from the codec table; detecting the codec list from the call request message received from the transmission IAD; and comparing the codec list of the reception IAD detected from the call request message with the codec list stored in the codec table, and selecting a settable codec.

The control method may further include, when receiving a call re-request message from the reception IAD, transmitting a response message including a codec list applicable from the codec table to the reception IAD; detecting a codec list from the call re-request message received from the transmission IAD; and comparing the codec list of the reception IAD detected from the call re-request message with the codec list stored in the codec table, and resetting a settable codec.

The control method may further include, when an arbitrary terminal requests a call additionally, incorporating a codec list processable by the reception IAD in communication into a call re-request message, transmitting the same to the reception IAD, and receiving the response message including a settable codec list; detecting a codec list from the response message received from the reception IAD; and comparing the codec list of the reception IAD detected from the response message with the codec list stored in the codec table, and resetting a settable codec.

The control method may further include: comparing the codec list of the reception IAD detected from the response message with the codec list stored in the codec table, and selecting a settable codec.

The control method may further include: detecting a codec list to be incorporated into a call request message, a response message, and a call re-request message from the codec table depending on an uplink frequency band and a set call.

The codec list of the codec table may include at least one of G.711, G.726-32, G.726-16, G.729, G.723.1 and T.38 Fax mode.

The incorporating of the codec list applicable from the codec table into the call request message, the transmitting the same to the reception IAD, and the receiving the response message including the settable codec list when the arbitrary terminal requests the call may include: determining whether a call is a voice call or a fax call when the arbitrary terminal requests the call; when the call is the fax call in the determining of whether the call is the voice call or the fax call, determining whether a T.38Fax codec is available; and when the T.38Fax codec is available in the determining of whether the T.38Fax codec is available, incorporating G.711 Fax and

T.38Fax into a call request message, a call re-request message, or a response message when setting a codec list, and transmitting the same.

The control method may further include, when the T.38Fax codec is not available in the determining of whether the T.38Fax codec is available, incorporating only G.711Fax into the call request message, the call re-request message, or the response message when setting the codec list, and transmitting the same.

According to the present invention as set for above, in the codec automatic setting system of an IAD and the control method thereof in a DSL network, the automatic codec switching function in the IAD system of a DSL supporting network automatically switches a codec into an optimum codec according to a DSL connection band and forming and releasing of a VoIP call, thereby securing an optimum communication quality for an Internet phone.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIGURE 1 is a view illustrating an ADSL network including an IAD according to an embodiment of the present invention;
FIGURE 2 is a block diagram of a codec automatic setting system of an IAD in a DSL network according to an embodiment of the present invention;
FIGURE 3 is a view illustrating a signal flow as a codec is reset to a reception IAD in communication when an additional call is generated to a transmission IAD of the codec automatic setting system of the IAD in the DSL network of FIGURE 2 according to an embodiment of the present invention;
FIGURE 4 is a view illustrating a signal flow as a codec is reset to a reception IAD in communication when an additional call is generated from a second transmission IAD to a transmission IAD of the codec automatic setting system of the IAD in the DSL network of FIGURE 2 according to an embodiment of the present invention;
FIGURE 5 is a view illustrating a signal flow as a codec is reset to a reception IAD in communication when an additional call is generated from a second transmission IAD to a reception IAD of the codec automatic setting system of the IAD in the DSL network of FIGURE 2 according to an embodiment of the present invention;
FIGURE 6 is a view illustrating a signal flow as a codec is reset to a reception IAD in communication when an additional call is generated from a reception IAD to a second reception IAD of the codec automatic setting system of the IAD in the DSL network of FIGURE 2 according to an embodiment of the present invention;
FIGURES 7A to 7D are views of codec lists included in a call request message, a call re-request message, and a response message according to an embodiment of the present invention;
FIGURE 8 is a flowchart illustrating a control method of automatically setting a codec of an IAD in a DSL network according to an embodiment of the present invention;
FIGURE 9 is a flowchart illustrating a method of setting a codec of a reception IAD in the control method of automatically setting the codec of the IAD in the DSL network of FIGURE 8 according to an embodiment of the present invention;
FIGURE 10 is a flowchart illustrating a method of resetting a codec of a reception IAD in the control method of automatically setting the codec of the IAD in the DSL network of FIGURE 8 according to an embodiment of the present invention;
FIGURE 11 is a flowchart illustrating a method of resetting a codec of a transmission IAD in the control method of automatically setting the codec of the IAD in the DSL network of FIGURE 8 according to an embodiment of the present invention; and
FIGURE 12 is a flowchart illustrating detailed operations of an operation of incorporating an applicable codec list into a call request message INVITE and transmitting the same in the control method of automatically setting the codec of the IAD in the DSL network of FIGURE 9 according to an embodiment of the present invention.

### DETAILED DESCRIPTION OF THE INVENTION

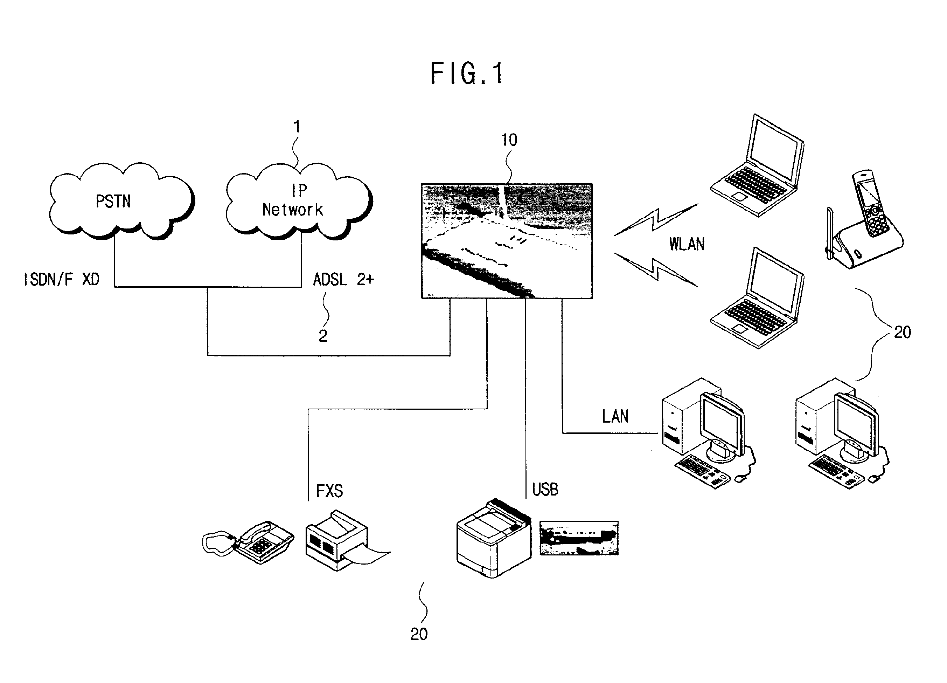

FIGURES 1 through 12, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged communication system.

FIGURE 1 is a view illustrating an ADSL system including an IAD. The ADSL system includes an IP network 1, an ADSL 2, an IAD 10, and at least one terminal 20.

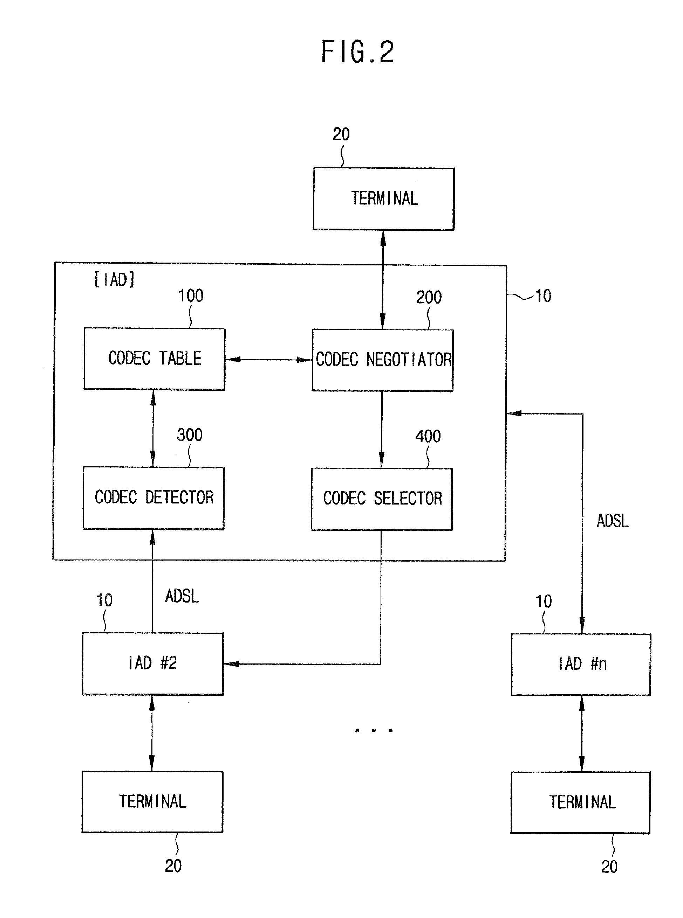

FIGURE 2 is a block diagram of a codec automatic setting system of an IAD in a DSL network according to the present invention. The codec automatic setting system of the IAD in the DSL network includes: a codec table 100, a codec negotiator 200, a codec detector 300, and a codec selector 400.

The codec table 100 stores at least one codec list. Here, the codec list includes at least one of G.711, G.726-32, G.726-16, G.729, G.723.1 and T.38 Fax mode. The codec list has an RTP packet illustrated in Table 1.

**Table 1**

| Header | G.711 | G.726-16 | G.726-32 | G.729 | G.723.1 | T38 |
|---|---|---|---|---|---|---|
| Link control | 8 | 8 | 8 | 8 | 8 | 8 |
| Identifier | 2 | 2 | 2 | 2 | 2 | 2 |
| Ethernet header | 14 | 14 | 14 | 14 | 14 | 14 |
| PPP over Ethernet | 6 | 6 | 6 | 6 | 6 | 6 |
| Point to Point | 2 | 2 | 2 | 2 | 2 | 2 |
| IP header | 20 | 20 | 20 | 20 | 20 | 20 |
| UDP header | 8 | 8 | 8 | 8 | 8 | 8 |
| RTP header | 12 | 12 | 12 | 12 | 12 | 46 |
| Payload | 160 | 40 | 80 | 20 | 24 | |

An actual use bandwidth is calculated including all of the headers as well as a payload.

At this point, in case of the payloads of G.711, G.726-16, G.726-32, and G.729, a multi-frame of 20 ms is used as a reference, and a multi-frame of 30 ms is used as a reference for G.723.1. In the present invention, a bandwidth for each codec is determined using calculations below.

Since a bandwidth is 232 bytes in the case of G.711a/u 20 ms, the bandwidth is 92.8 kbps in terms of kbps.

Since a bandwidth is 112 bytes in the case of G.726-16a 20 ms, the bandwidth is 44.8 kbps in terms of kbps.

Since a bandwidth is 152 bytes in the case of G.726-32 20 ms, the bandwidth is 60.8 kbps in terms of kbps.

Since a bandwidth is 92 bytes in the case of G.729 20 ms, the bandwidth is 36.8 kbps in terms of kbps.

Since a bandwidth is 96 bytes in the case of G.723.1 30 ms, the bandwidth is 38.4 kbps in terms of kbps.

Since a bandwidth is 106 bytes in the case of T.38 Fax mode, the bandwidth is 42.4 kbps in terms of kbps.

Also, a voice quality for each codec is converted into a MOS (mean opinion score) value as illustrated in Table 2.

**Table 2**

| | | | | | |
|---|---|---|---|---|---|
| CODEC | G.711 | G.726-32 | G.726-16 | G.729 | G.723.1 |
| MOS | 4.1 | 3.85 | 3.72 | 3.92 | 3.65 |

Table 2 shows MOS values measured by a PESQ algorithm using VQT equipment, and sound quality reduction may be generated depending on the characteristic of a codec used in VoIP communication.

When an arbitrary terminal 20 requests a call, the codec negotiator 200 incorporates a codec list applicable from the codec table 100 into a call request message INVITE, transmits the same to a second IAD 10, and receives a response message 200 OK including a settable codec list.

Meanwhile, when receiving a call request message INVITE including a codec list from a first IAD 10, the codec negotiator 200 transmits a response message 200 OK including a codec list applicable from the codec table 100.

When receiving a call re-request message Re-INVITE from the second IAD 10, the codec negotiator 200 transmits a response message 200 OK including a codec list applicable from the codec table 100 to the second IAD 10.

On the other hand, when the arbitrary terminal 20 requests a call additionally, the codec negotiator 200 incorporates a codec list processable by the second IAD 10 in communication into a call re-request message Re-INVITE, transmits the same to the second IAD 10, and receives a response message 200 OK including a settable codec list. Meanwhile, the call re-request message is transmitted even when a call is released to request resetting of a codec.

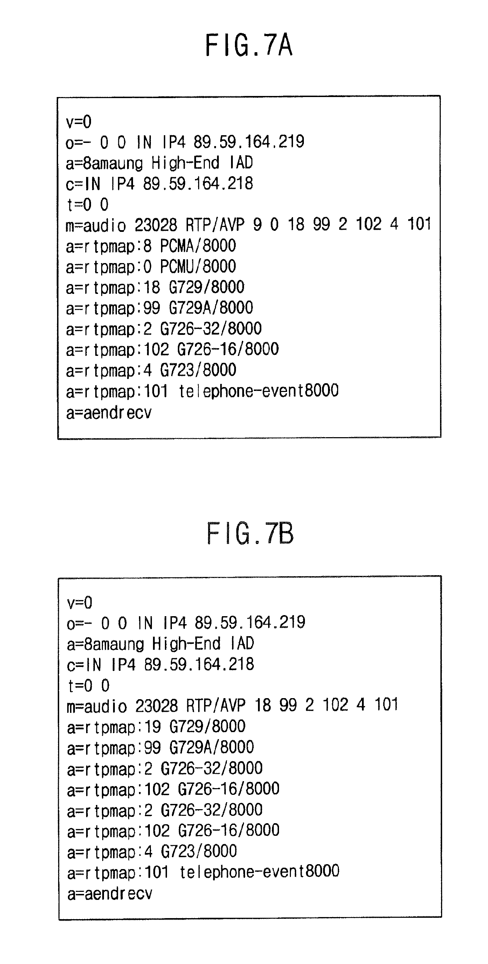

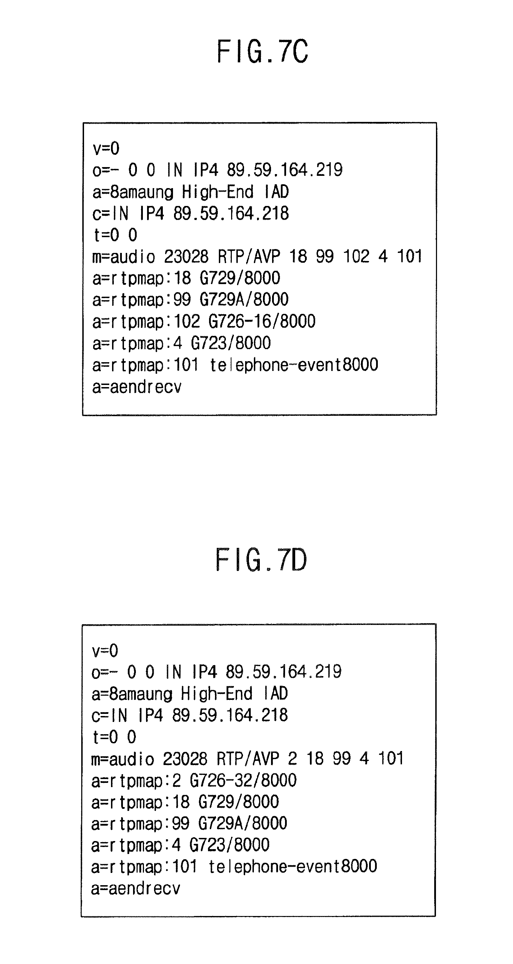

At this point, codec lists incorporated into a call request message, a response message, and a call re-request message by the codec negotiator 200 are illustrated in FIGURES 7A to 7D.

Meanwhile, when an arbitrary terminal 20 requests a call, the codec negotiator 200 determines whether the call is a voice call or a fax call. When the call is the fax call and T.38Fax codec is available, the codec negotiator 200 incorporates G.711 Fax and

T.38Fax into a call request message, a call re-request message, or a response message when setting a codec list. When the T.38Fax is not available, the codec negotiator 200 incorporates only G.711Fax into the call request message, call re-request message, or response message when setting the codec list, and transmits the same.

In addition, the codec detector 300 detects a codec list from a response message received from the second IAD 10.

Also, the codec selector 400 compares the codec list of the second IAD 10 detected from the response message through the codec detector 300 with the codec list stored in the codec table 100, and selects a settable codec.

In addition, the codec selector 400 compares the codec list of the second IAD 10 detected from the response message with the codec list stored in the codec table 100, and selects a settable codec.

Here, the codec selector 400 detects a codec list to be incorporated into a call request message, a response message, and a call re-request message from the codec table 100 depending on an uplink frequency band and a set call.

Descriptions of the general functions and detailed operations of the above-described elements are omitted, and instead, the operations relevant to the present invention are described below.

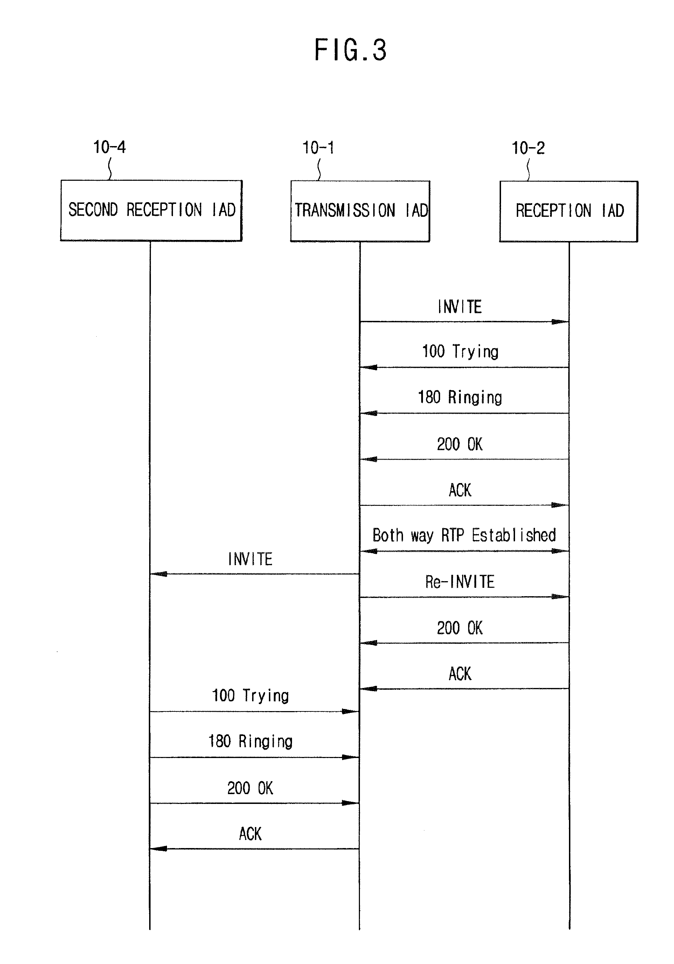

First, when the arbitrary terminal 20 requests a call, the codec negotiator 200 of the transmission IAD 10-1 checks a codec list that can be set from the codec table 100, incorporates the codec list into a call request message INVITE, and transmits the same to a relevant reception IAD 10-2 as illustrated in FIGURE 3.

That is, because the transmission IAD 10-1 does not use a bandwidth currently, it can use all of the codecs. Therefore, the codec negotiator 200 incorporates a codec list including all information for G.711, G.726-32, G.726-16, G.729, G.723.1, and T.38 Fax mode into a call request message INVITE as illustrated in FIGURE 7A.

After that, when receiving a response message 200 OK including a codec list of the reception IAD 10-2 from the reception IAD 10-2, the transmission IAD 10-1 detects the codec list of the reception IAD 10-2 included in the response message 200 OK through the codec detector 300.

When the codec list detected through the codec detector 300 includes codec information for G.711, G.726-32, G.726-16, G.729, G.723.1, and T.38 Fax mode as illustrated in FIGURE 7A, the codec selector 400 sets the G.711 that can provide a best voice quality as a codec.

Therefore, the transmission IAD 10-1 and the reception IAD 10-2 provide VoIP voice communication through a G.711 codec.

After that, when the arbitrary terminal 20 requests a second call to the transmission IAD 10-1 in communication , the codec negotiator 200 of a relevant IAD resets a codec with the reception IAD 10-2 in communication as a call to be provided increases by two.

That is, the codec negotiator 200 searches for a codec that can be provided through a providable bandwidth and the rest bandwidth, except a bandwidth for a codec provided for call setting, from the codec table 100, incorporates only a settable codec list (as illustrated in FIGURE 7B) into a call re-request message Re-INVITE, and transmits the same to the reception IAD 10-2. For example, the transmission IAD 10-1 having an uplink bandwidth of 128 kbps sets one G.711 codec (92.8 kbps). Then, 29.2 kbps remains from the bandwidth of the uplink.

Therefore, when the arbitrary terminal 20 requests a second call to the transmission IAD 10-1 in communication, the codec negotiator 200 should perform codec renegotiation with the reception IAD 10-2 in communication.

At this point, the transmission IAD 10-1 incorporates the codec list illustrated in FIGURE 7B into a call request message INVITE, and transmits the same to a second reception IAD 10-4 to perform operations for call setting and codec setting.

Meanwhile, the codec negotiator 200 incorporates the rest of the codec list (FIGURE 7B) obtained by subtracting G.711 from the codec list stored in the codec table 100, into a call re-request message, and transmits the same to the reception IAD 10-2 in communication.

After that, when receiving a response message including a codec list from the reception IAD 10-2, the transmission IAD 10-1 detects the codec list of the reception IAD 10-2 from the response message through the codec detector 300.

Subsequently, the transmission IAD 10-1 compares the codec list of the reception IAD 10-2 detected through the codec detector 300 with the codec list transmitted to the reception IAD 10-2 to change (reset) codec setting into a settable codec. That is, the codec selector 400 changes G.711 into G.726-32. The codec may be set in the order of a bandwidth size.

Meanwhile, since only codec information (illustrated in FIGURE 7B) for G.726-32, G.726-16, G.729, G.723.1, and T.38 Fax mode from the transmission IAD 10-1 in communication is incorporated into a call re-request message Re-INVITE even when the uplink bandwidth of the reception IAD 10-2 is 192 kbps, the codec selector 400 of the reception IAD 10-2 changes codec setting into the G.726-32(60.8 kbps) having the greatest bandwidth.

On the other hand, when receiving a call request message or a call re-request message from the transmission IAD 10-1, the reception IAD 10-2 detects a codec list from the message, detects a settable codec list from the codec table 100, incorporates the detected codec list into a response message, and transmits the same to the transmission IAD 10-1.

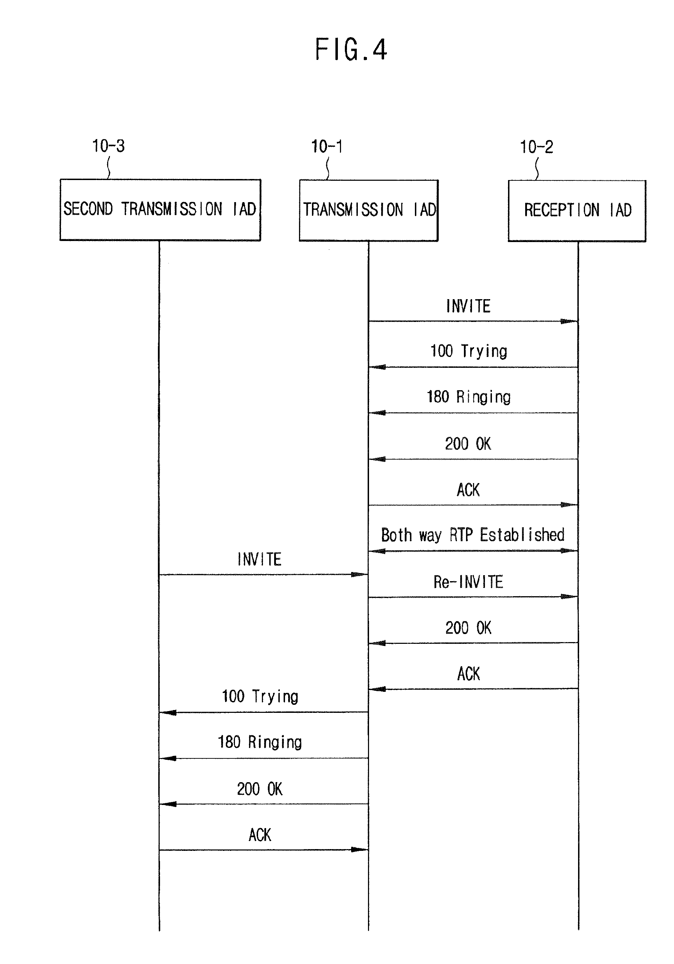

Meanwhile, when the second transmission IAD 10-3 tries a call request to the transmission IAD 10-1, the operations illustrated in FIGURE 4 are performed.

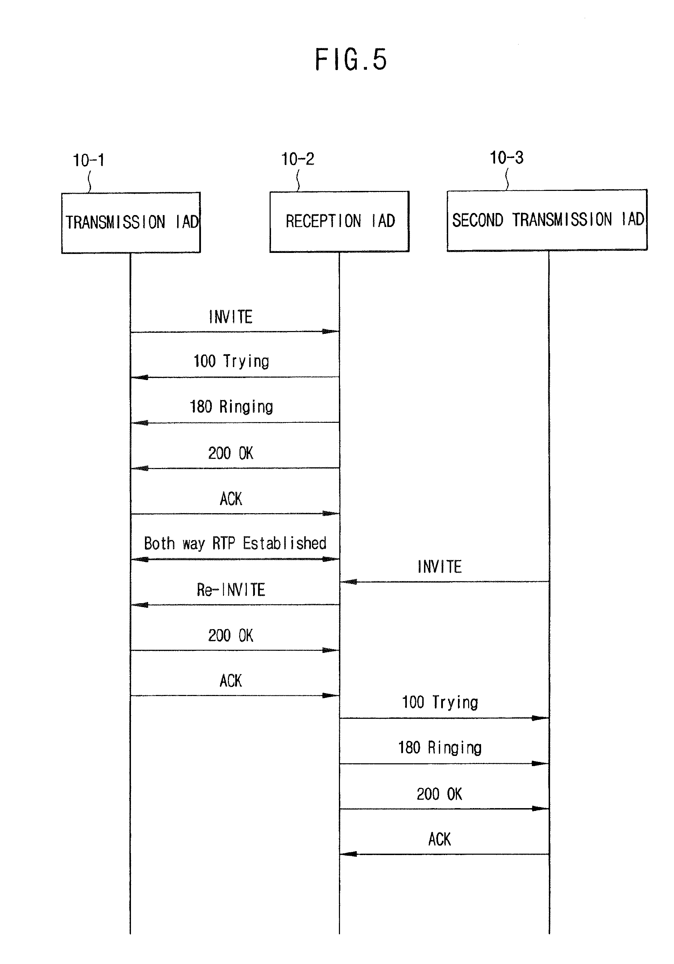

Also, when the second transmission IAD 10-3 tries a call request to the reception IAD 10-2, the operations illustrated in FIGURE 5 are performed.

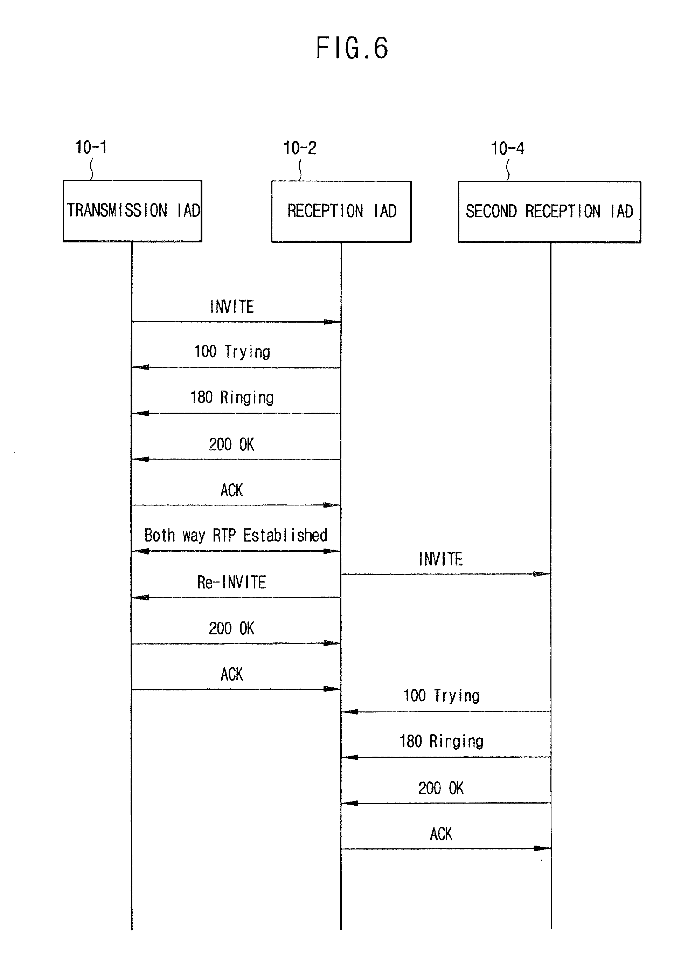

In addition, when the reception IAD 10-2 tries a call request to a second reception IAD 10-4, the operations illustrated in FIGURE 6 are performed.

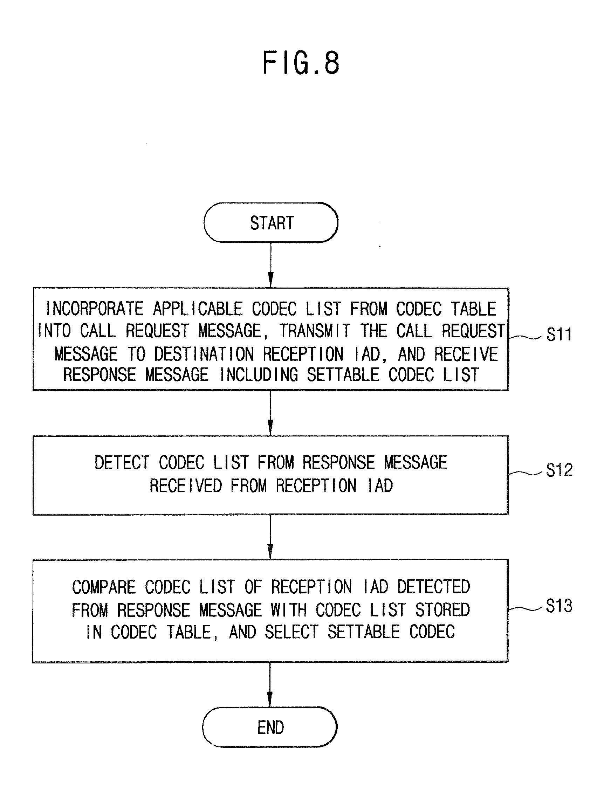

Hereinafter, a control method of automatically setting a codec of an IAD in a DSL network according to the present invention having the foregoing construction is described with reference to FIGURES 8 to 12.

First, when the arbitrary terminal 20 requests a call, an applicable codec list from the codec table 100 is incorporated into a call request message INVITE, transmitted to a destination reception IAD 10-2, and a response message 200 OK including a settable codec list is received as illustrated in FIGURE 8 (S11).

Subsequently, a codec list is detected from the response message received from the reception IAD 10-2 (S12).

Then, the codec list of the reception IAD 10-2 detected from the response message is compared with the codec list stored in the codec table 100, and a settable codec list is then selected (S13).

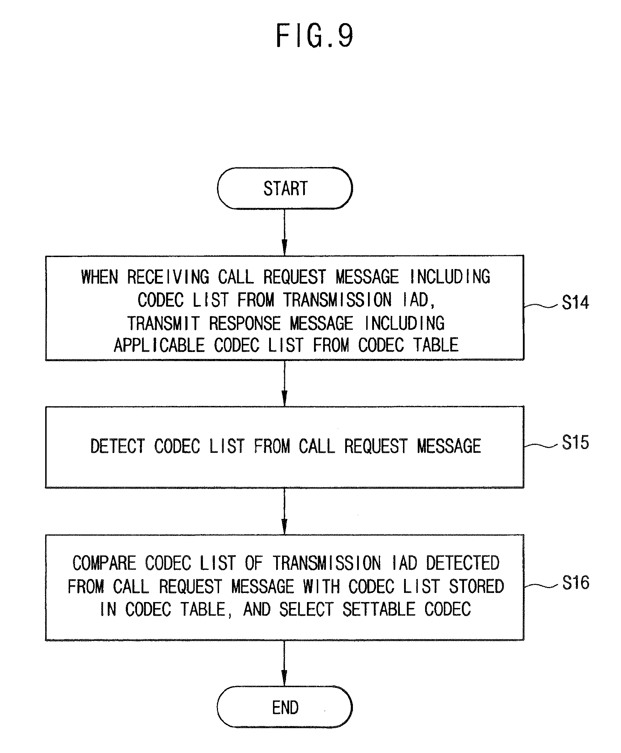

On the other hand, when a call request message INVITE including a codec list is received from the transmission IAD 10-1, a response message 200 OK into which an applicable codec list from the codec table 100 is incorporated is transmitted as illustrated in FIGURE 9 (S14).

The codec list is detected from the call request message (S15).

Subsequently, the codec list of the transmission IAD 10-1 detected from the call request message is compared with the codec list stored in the codec table 100, and a settable codec is then selected (S16).

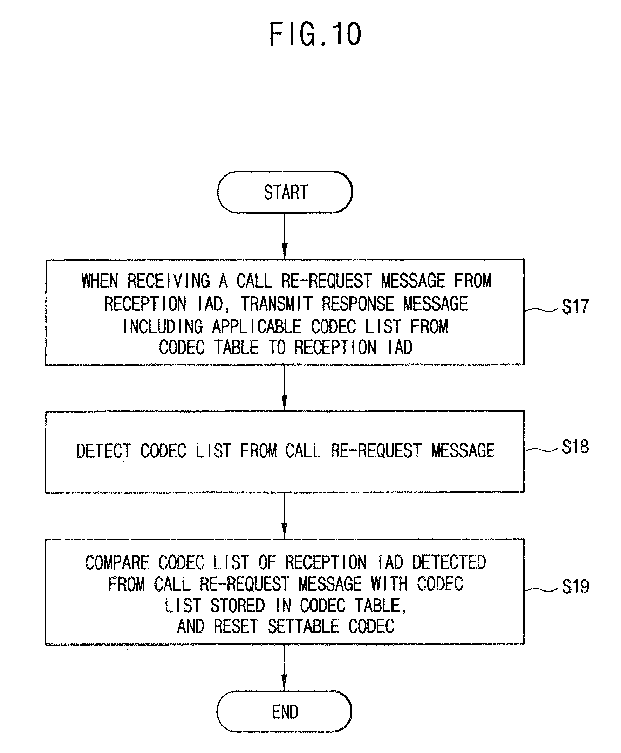

On the other hand, when a call re-request message Re-INVITE is received from the reception IAD 10-2, a response message 200 OK into which an applicable codec list from the codec table 100 is incorporated is transmitted to the reception IAD 10-2 as illustrated in FIGURE 10 (S17).

A codec list is detected from a call re-request message (S18).

Simultaneously, the codec list of the reception IAD 10-2 detected from the call re-request message is compared with the codec list stored in the codec table 100, and a settable codec is then reset (S19).

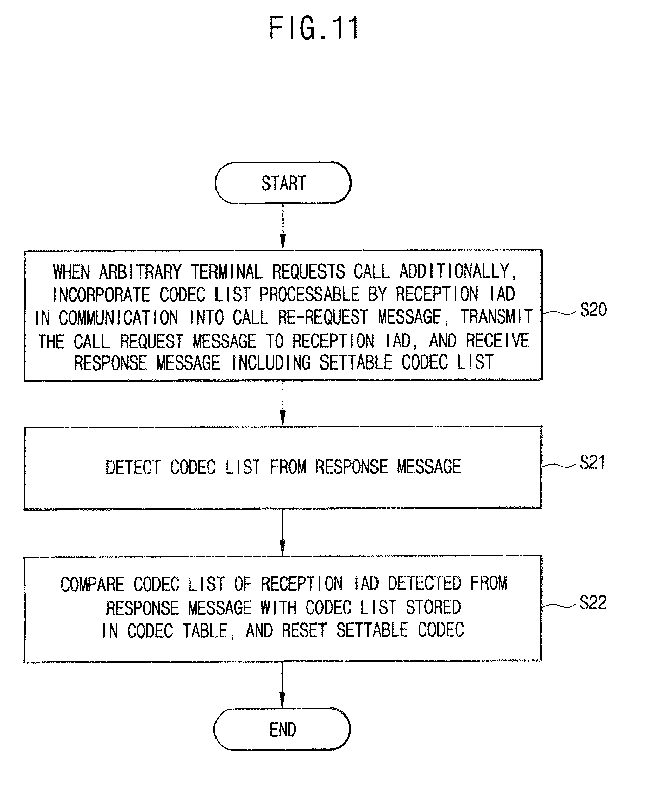

Meanwhile, when the arbitrary terminal 20 requests a call additionally, a codec list processable by the reception IAD 10-2 in communication is incorporated into a call re-request message Re-INVITE, and transmitted to the reception IAD 10-2, and a response message 200 OK including a settable codec list is then received as illustrated in FIGURE 11 (S20).

The codec list is detected from the response message (S21).

Simultaneously, the codec list of the reception IAD 10-2 detected from the response message is compared with the codec list stored in the codec table 100, and a settable codec is then reset (S22).

Meanwhile, the codec selector 400 selects a codec list to be incorporated into a call request message, a response message, and a call re-request message from the codec table 100 depending on an uplink frequency band and a set call.

Here, the codec list of the codec table 100 includes at least one of G.711, G.726-32, G.726-16, G.729, G.723.1 and T.38 Fax mode.

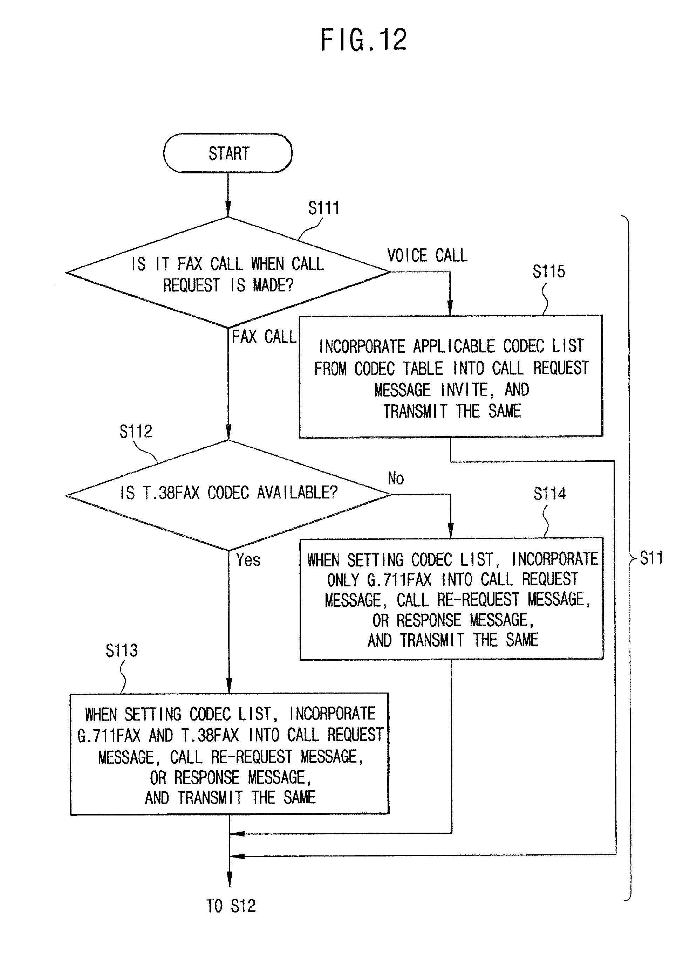

Meanwhile, the operation S11 of incorporating the codec list into the call request message INVITE, transmitting the same to the destination IAD 10-2, and receiving the response message 200 OK including the settable codec list will be described with reference to FIGURE 12.

When the arbitrary terminal 20 requests a call, whether the call is a voice call or a fax call is determined (S111).

When the call is the fax call in the operation (S111) of determining whether the call is the voice call or the fax call, whether a T.38Fax codec is available is determined (S112).

When the T.38Fax codec is available (YES) in the operation (S112) of determining whether the T.38Fax codec is available, G.711 Fax and T.38Fax are incorporated into a call request message, a call re-request message, or a response message and transmitted while a codec list is set (S113).

On the other hand, when the T.38Fax codec is not available (NO) in the operation (S112) of determining whether the T.38Fax codec is available, only G.711 Fax is incorporated into a call request message, a call re-request message, or a response message and transmitted while the codec list is set (S114).

At this point, when the call is the voice call in the operation (S111) of determining whether the call is the voice call or the fax call, an applicable codec list from the codec table 100 is incorporated into a call request message INVITE and transmitted (S115). It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing a system or method as claimed in any one of the claims of this specification and a machine-readable storage storing such a program. Still further, such programs may be conveyed electronically via any medium such as a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

## Claims

1. A codec automatic setting system of an integrated access device (IAD) in a digital subscriber line (DSL) network, the system comprising:
a codec table storing at least one codec list;
a codec negotiator incorporating an applicable codec list from the codec table into a call request message, transmitting the call request message to a reception integrated access device, and receiving a response message 200 OK comprising a settable codec list when a terminal requests a call;
a codec detector detecting a codec list from the response message received from the reception integrated access device; and
a codec selector comparing the codec list of the reception integrated access device detected from the response message through the codec detector with the codec list stored in the codec table, and selecting a settable codec.

2. The system according to claim 1, wherein the codec negotiator transmits the response message comprising the applicable codec list from the codec table when receiving a call request message comprising a codec list from a transmission integrated access device.

3. The system according to claim 1, wherein the codec negotiator transmits a response message comprising an applicable codec list from the codec table to the reception integrated access device when receiving a call re-request message from the reception integrated access device.

4. The system according to claim 2, wherein when a terminal requests a call additionally, the codec negotiator incorporates a codec list processable by the reception integrated access device in communication into a call re-request message, transmits the call re-request message to the reception integrated access device, and receives a response message comprising a settable codec list.

5. The system according to claim 4, wherein when a call is released, the codec negotiator incorporates a codec list processable by the reception integrated access device in communication into the call re-request message, transmits the call re-request message to the reception integrated access device, and receives a response message comprising a settable codec list.

6. The system according to claim 4, wherein the codec selector compares the codec list of the reception integrated access device detected from the response message with the codec list stored in the codec table, and then selects a settable codec.

7. The system according to claim 1 or claim 6, wherein the codec selector detects a codec list to be incorporated into a call request message, a response message, and a call re-request message from the codec table depending on an uplink frequency band and a set call.

8. The system according to claim 1 or claim 4, wherein the codec table comprises at least one of G.711, G.726-32, G.726-16, G.729, G.723.1 and T.38 Fax mode.

9. A control method of automatically setting a codec of an integrated access device (IAD) in a digital subscriber line (DSL) network, the method comprising:
when an arbitrary terminal requests a call, incorporating an applicable codec list from a codec table into a call request message, transmitting the call request message to a reception integrated access device, and receiving a response message comprising a settable codec list;
detecting the codec list from the response message received from the reception integrated access device; and
comparing the codec list of the reception integrated access device detected from the response message with the codec list stored in the codec table, and selecting a settable codec.

10. The method according to claim 9, further comprising;
when receiving a call request message comprising a codec list from a transmission integrated access device, transmitting a response message comprising an applicable codec list from the codec table;
detecting the codec list from the call request message received from the transmission integrated access device; and
comparing the codec list of the reception integrated access device detected from the call request message with the codec list stored in the codec table, and selecting a settable codec.

11. The method according to claim 9, further comprising:
when receiving a call re-request message from the reception integrated access device, transmitting a response message comprising an applicable codec list from the codec table to a reception integrated access device;
detecting a codec list from the call re-request message received from the reception integrated access device; and
comparing the codec list of the reception integrated access device detected from the call re-request message with the codec list stored in the codec table, and resetting a settable codec.

12. The method according to claim 10, further comprising:
when a terminal requests a call additionally, incorporating a codec list processable by the reception integrated access device in communication into a call re-request message, transmitting the call re-request message to the reception integrated access device, and receiving a response message comprising a settable codec list;
detecting the codec list from the response message received from the reception integrated access device; and
comparing the codec list of the reception integrated access device detected from the response message with the codec list stored in the codec table, and resetting a settable codec.

13. The method according to claim 12, further comprising comparing the codec list of the reception integrated access device detected from the response message with the codec list stored in the codec table, and selecting a settable codec.

14. The method according to claim 9, wherein incorporating the codec list applicable from the codec table into the call request message, transmitting the the call request message to the reception integrated access device, and the receiving the response message comprising the settable codec list when the arbitrary terminal requests the call, comprise:
determining whether a call is a voice call or a fax call when the terminal requests the call;
when the call is a fax call, determining whether a T.38Fax codec is available; and
when the T.38Fax codec is available, incorporating G.711 Fax and T.38Fax into a call request message, a call re-request message, or a response message when setting a codec list, and transmitting the same.

15. The method according to claim 16, further comprising, when the T.38Fax codec is not available, incorporating only G.711 Fax into the call request message, the call re-request message, or the response message when setting the codec list, and transmitting the same.
